(19) Europäisches Patentamt
European Patent Office
Office européen des brevets

(11) **EP 3 508 273 A1**

(12) **EUROPEAN PATENT APPLICATION**
published in accordance with Art. 153(4) EPC

(43) Date of publication:
**10.07.2019 Bulletin 2019/28**

(51) Int Cl.:
*B01J 47/127* (2017.01)     *B01J 39/20* (2006.01)
*B01J 45/00* (2006.01)      *C02F 1/42* (2006.01)
*C02F 1/44* (2006.01)       *D06M 14/16* (2006.01)
*D06M 15/263* (2006.01)     *D06M 15/285* (2006.01)

(21) Application number: **17846467.3**

(86) International application number:
**PCT/JP2017/030866**

(22) Date of filing: **29.08.2017**

(87) International publication number:
**WO 2018/043462 (08.03.2018 Gazette 2018/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **31.08.2016  JP 2016169275
26.12.2016  JP 2016251199**

(71) Applicant: **Torav Industries, Inc.**
**Tokyo 103-8666 (JP)**

(72) Inventors:
• **MIYAMOTO, Ryoma**
**Otsu-shi**
**Shiga 520-8558 (JP)**
• **YONEDA, Keisuke**
**Iyo-gun**
**Ehime 791-3193 (JP)**

• **HIRANABE, Ryuichiro**
**Otsu-shi**
**Shiga 520-8558 (JP)**
• **KANAMORI, Satoko**
**Otsu-shi**
**Shiga 520-8558 (JP)**
• **TAKEDA, Keiji**
**Otsu-shi**
**Shiga 520-2141 (JP)**
• **NAGAI, Noriko**
**Otsu-shi**
**Shiga 520-2141 (JP)**
• **ASAI, Naoki**
**Otsu-shi**
**Shiga 520-2141 (JP)**

(74) Representative: **Kador & Partner PartG mbB**
**Corneliusstraße 15**
**80469 München (DE)**

(54) **ION EXCHANGE FIBER, WATER PURIFICATION FILTER AND WATER TREATMENT METHOD**

(57)     The present invention relates to an ion exchange fiber which is provided with a core fiber and an ion exchange layer that is arranged around the core fiber and contains a crosslinked polymer compound having an ion exchange group, and which is characterized in that: the area of the ion exchange layer accounts for 50% to 90% (inclusive) of the total cross-sectional area of a cross-section that is perpendicular to the longitudinal direction of the ion exchange fiber; and the swelling ratio of the ion exchange fiber is 50% or less.

*Fig. 1*

ION EXCHANGE FIBER
ION EXCHANGE LAYER
CORE FIBER

**Description**

TECHNICAL FIELD

The present invention relates to a fiber having an ion exchange capacity suitable for removing a hardness component, a fine particle, a heavy metal, and the like of tap water, a water purification filter including the fiber, and a water treatment method using the water purification filter.

BACKGROUND ART

An ion exchange fiber has been proposed as means for removing a hardness component from water.
Patent Document 1 discloses, as an ion exchange fiber, a fiber formed by hydrolyzing polyacrylonitrile (PAN) fiber while crosslinking with a hydrazine/sodium hydroxide aqueous solution.
In addition, Patent Document 2 discloses a fiber obtained by wet-spinning polyvinyl alcohol mixed with a partially neutralized salt of a polymeric polycarboxylic acid.
In addition, Patent Document 3 discloses a method for producing a separation functional fiber in which a fiber having a core-sheath structure is irradiated with ionizing radiation and thereafter glycidyl methacrylate is grafted to the fiber.

BACKGROUND ART DOCUMENT

PATENT DOCUMENT

Patent Document 1: JP-A-1-234428
Patent Document 2: JP-A-9-087399
Patent Document 3: JP-A-8-199480

SUMMARY OF THE INVENTION

PROBLEMS THAT THE INVENTION IS TO SOLVE

Since an ion exchange fiber in the background art has a high degree of swelling in water, there is a problem that a water flow resistance increases due to swelling.
An object of the present invention is to provide an ion exchange fiber having a low water flow resistance.

MEANS FOR SOLVING THE PROBLEMS

Namely, the present invention relates to the following items (1) to (10).

(1) An ion exchange fiber including:

a core fiber; and
an ion exchange layer that is disposed at a vicinity of the core fiber and includes a crosslinked polymer compound having an ion exchange group,
in which, in a cross section perpendicular to a longitudinal direction of the ion exchange fiber, an area of the ion exchange layer occupies 50% or more and 90% or less of a total cross sectional area, and
the ion exchange fiber has a swelling ratio of 50% or less.

(2) The ion exchange fiber according to (1), having an ion exchange capacity in an Na type wet state of 3.0 meq/wet-g or more.
(3) The ion exchange fiber according to (1) or (2), in which the ion exchange group is at least one functional group selected from the group consisting of carboxy group, chelate group, and phosphate group.
(4) The ion exchange fiber according to any one of (1) to (3), having two or more core fibers.
(5) The ion exchange fiber according to any one of (1) to (4), in which the crosslinked polymer compound having an ion exchange group is formed by a crosslinking reaction between a polymer compound having a carboxy group and a compound having two or more functional groups reactive with a carboxy group.

(6) The ion exchange fiber according to (5), in which the polymer compound having a carboxy group is polyacrylic acid, and

the compound having two or more functional groups reactive with a carboxy group is a polyglycidyl compound, a polyoxazoline compound, or a polycarbodiimide compound.

(7) The ion exchange fiber according to any one of (1) to (6), in which the ion exchange layer contains 50% by weight or more of a polymer including an acrylic monomer.

(8) The ion exchange fiber according to any one of (1) to (7), in which the core fiber contains at least one polymer selected from the group consisting of polyethylene, polypropylene, polyethylene terephthalate, and nylon.

(9) A water purification filter including:

a woven or knitted fabric including the ion exchange fiber according to any one of (1) to (8) or a bundle of the ion exchange fibers,

in which a diameter of the ion exchange fiber or the bundle of the ion exchange fibers is 30 $\mu$m or more and 1000 $\mu$m or less.

(10) A water treatment method including:

a step of permeating raw water through a prefilter;

a step of permeating permeate of the prefilter through the water purification filter according to (9), thereby removing a hardness component from the permeate; and

a step of permeating permeate of the water purification filter through a reverse osmosis membrane element.

ADVANTAGE OF THE INVENTION

A component of a layer including a polymer compound that has an ion exchange group and is crosslinked by covalent bonds is 50% or more and 90% or less of all components of the fiber. Therefore, both of an ion exchange capacity and a reduction of a water flow resistance can be compatible. Furthermore, the diameter of the fibers forming a woven or knitted fabric is set to 30 $\mu$m or more and 1000 $\mu$m or less. Therefore, it is possible to lower the water flow resistance without lowering the ion exchange capacity.

BRIEF DESCRIPTION OF THE DRAWINGS

Fig. 1 is a cross-sectional view illustrating an example of an ion exchange fiber of the present invention.
Fig. 2 is a cross-sectional view illustrating other example of the ion exchange fiber of the present invention.

MODE FOR CARRYING OUT THE INVENTION

1. Ion Exchange Fiber

An ion exchange fiber of the present invention includes a core fiber and an ion exchange layer. The number of the core fibers contained in the ion exchange fiber, and a cross sectional shape of the core fiber are not particularly limited.

In the embodiment, the ion exchange fiber satisfies the following two conditions (a) and (b).

(a) When the ion exchange fiber is immersed in 1 mol/L of sodium hydroxide aqueous solution, and thereafter a cross section of the ion exchange fiber in sodium type was observed with a scanning electron microscope/electron probe micro analyzer (SEM/EPMA), an area of a layer having a sodium atom concentration of 10% by weight or more is present at 50% or more of a cross-sectional area of the fiber.
(b) A swelling ratio is 50% or less.

The sodium atom concentration (% by weight) in the above-described condition (a) is a weight fraction of sodium element in each pixel in the cross-sectional image when the sample section is measured by SEM/EPMA. In EPMA, the X-ray intensity of K$\alpha$ (1.191 nm) detected when irradiated with an electron beam to a sodium chloride crystal as a standard sample corresponds to the sodium atom concentration of 39.34% by weight. The sodium atom concentration is calculated from the X-ray intensity of K$\alpha$ (1.191 nm) detected from the pixel in the cross-sectional image when the cross section of the sample is measured by SEM/EPMA. The swelling ratio in the above-described condition (b) is the rate of increase in fiber diameter when the ion exchange fiber is made to be the Na type and observed with the microscope, with respect to the fiber diameter when the ion exchange fiber in the H type is observed with a microscope. In order to make the ion exchange fiber into the H type, the ion exchange fiber is immersed in 1 mol/L of hydrochloric acid and then washed with pure water. To make the ion exchange fiber into the Na type, the ion exchange fiber is immersed in 1 mol/L of sodium hydroxide aqueous solution and then washed with pure water.

In the ion exchange fiber, the layer satisfying the above-described condition (a) is the ion exchange layer.

When the fraction of an area of the ion exchange layer with respect to the fiber cross sectional area arbitrarily cut in the plane perpendicular to the fiber longitudinal direction is defined as an ion exchange crosslinked layer content, the ion exchange crosslinked layer content is 50% or more and 90% or less.

As the material of the core fibers, polyolefins such as polyethylene and polypropylene; polyesters such as polyethylene terephthalate, polybutylene terephthalate, polylactic acid, polycarbonate; polyamides such as aromatic polyamide, nylon 6, nylon 66, nylon 11, nylon 12, and nylon 610; halogenated polyolefins such as acrylic, polyacrylonitrile, polyvinyl chloride, PTFE, polyvinylidene fluoride, and the like can be used. It is preferable that the core fiber contains at least one polymer selected from the group consisting of polyethylene, polypropylene, polyethylene terephthalate, and nylon. As the core fiber, polyamide and polyester are particularly preferable. In polyamide, nylon 6 and nylon 66 are particularly preferable, and in polyester, polyethylene terephthalate (PET) is particularly preferable.

The ion exchange layer contains a polymer having an ion exchange group.

The ion exchange group may be any one of a cation exchange group and an anion exchange group. Examples of the cation exchange group include a strongly acidic cation exchange group such as a sulfonic acid group, and a weakly acidic cation exchange group such as a carboxy group and a phosphate group. Examples of the anion exchange group include a quaternary ammonium base and a tertiary amino group. Additionally, the ion exchange group may be a chelate group. Examples of the chelate group include an iminodiacetic acid group and a glucamine group.

The polymer contained in the ion exchange layer and having the ion exchange group is specifically a crosslinked polymer compound.

The crosslinked polymer compound is a compound in which a plurality of polymer chains are multipointly crosslinked by covalent bonds. The crosslinked polymer compound has a three-dimensional network structure formed by crosslinking and is insoluble in a solvent such as water and an organic solvent, but can retain a solvent in the network structure thereof. It can be said that the crosslinked polymer compound is a gel.

The crosslinked polymer compound is, for example, a compound formed by a crosslinking reaction between a polymer compound having a carboxy group and a compound having two or more functional groups reactive with a carboxy group.

The polymer compound having a carboxy group is a compound having a plurality of carboxy groups in the molecule thereof, and specifically, is exemplified by a polymer obtained by hydrolyzing a homopolymer or a copolymer. Examples of the homopolymer include a homopolymer of acrylic acid or methacrylic acid, and examples of the copolymer include a copolymer containing at least one of acrylic acid and methacrylic acid as a monomer component, a copolymer containing maleic anhydride as a monomer component, an acrylic acid ester, and a methacrylic acid ester. More specifically, examples of the polymer compound having a carboxy group include polyacrylic acid.

A compound having two or more functional groups reactive with a carboxy group refers to a compound having a plurality of functional groups which react with a carboxyl group, such as a hydroxyl group, an amino group, a glycidyl group, an oxazoline group, a carbodiimide group or the like in the molecule thereof to form a covalent bond, and specifically, is preferably a compound having a plurality of high reactive functional groups such as a glycidyl group, an oxazoline group, a carbodiimide group or the like. Specific examples of such compounds include polyglycidyl compounds, polyoxazoline compounds, and polycarbodiimide compounds.

The polyglycidyl compound refers to a compound containing two or more glycidyl groups in one molecule, and specific examples thereof include denacol EX-313 (glycerol polyglycidyl ether), EX-421 (diglycerol polyglycidyl ether), EX-512 (polyglycerol polyglycidyl ether), EX-612 (sorbitol polyglycidyl ether), EX-810 (ethylene glycol diglycidyl ether), EX-821 (polyethylene glycol diglycidyl ether), and EX-850 (diethylene glycol diglycidyl ether), manufactured by Nagase ChemteX Corporation.

The polyoxazoline compound refers to a compound containing two or more oxazoline groups in one molecule, and specific examples thereof include EPOCROS WS-300, WS-500, and WS-700, manufactured by Nippon Shokubai Co., Ltd.

The polycarbodiimide compound refers to a compound containing two or more carbodiimide groups in one molecule, and specific examples thereof include Carbodilite V-02, SV-02, and V-10, manufactured by Nisshinbo Chemicals Co., Ltd.

One type of crosslinked polymer compound may have plural types of ion exchange groups. In addition, one type of crosslinked polymer compound may have only one of a cation exchange group or an anion exchange group, or may have both of these. The crosslinked polymer compound may be configured to include one type of monomer or may be configured to include two or more types of monomers.

From the viewpoint of the ion exchange capacity, it is preferable that the ion exchange layer contains 50% by weight or more, and preferably 60% by weight or more of, in particular, a polymer including an acrylic monomer. The polymer including an acrylic monomer is contained in an amount of 50% by weight or more, whereby it is possible to obtain an ion exchange fiber having a large ion exchange capacity. In addition, it is preferable that a polymer including an acrylic monomer is contained in an amount of 95% by weight or less, and preferably 85% by weight or less. The polymer including an acrylic monomer is contained in an amount of 95% by weight or less, whereby swelling of the ion exchange fiber is suppressed and clogging is less likely to occur when made into a water purification filter.

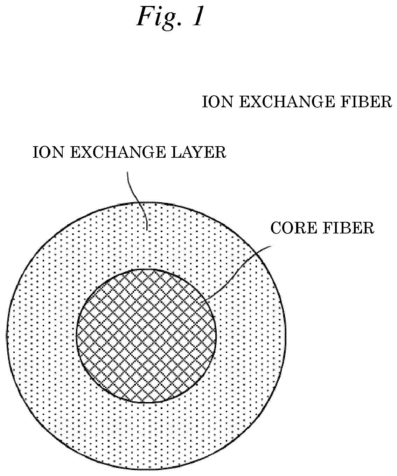

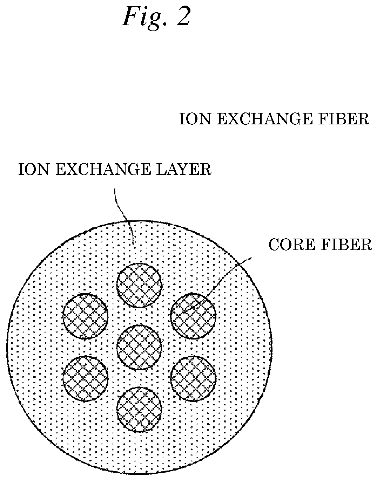

Figs. 1 and 2 illustrate cross-sectional views of examples of the ion exchange fibers. As illustrated in these drawings, the ion exchange fiber includes a core fiber and an ion exchange layer formed at a vicinity of the core fiber. One ion exchange fiber may include only one core fiber as illustrated in Fig. 1, or may include a plurality of core fibers as illustrated in Fig. 2. The core fibers may be monofilaments or multifilaments. Although the cross sectional shape of the ion exchange fiber and the core fiber is schematically illustrated as a circle, the present invention is not limited thereto.

The ion exchange capacity of the ion exchange fiber is preferably 3.0 meq/wet-g or more. The ion exchange capacity of the ion exchange fiber may be 4.0 meq/wet-g or more. When the ion exchange capacity is 3.0 meq/wet-g or more, the lifetime of the ion exchange fiber is prolonged. In addition, the ion exchange capacity is preferably 8.0 meq/wet-g or less, and may be 6.0 meq/wet-g or less. When the ion exchange capacity is 8.0 meq/wet-g or less, excessive densification of the ion exchange group can be suppressed, and as a result, not only an ion exchange group present on a surface layer part of the ion exchange layer to be contact with raw water but also an ion exchange group present inside the ion exchange layer can be utilized, whereby the lifetime of the ion exchange fiber is prolonged. "wet-g" means the weight of the ion exchange fiber with Na type in a wet state.

2. Method for Producing Ion Exchange Fiber

Core fibers can be produced by melt spinning, electro spinning, or wet spinning. In a case of producing a plurality of core fibers, a sea-island melt spinning method is used, in which the core fiber is used as an island component, the component which is more easily dissolved in an alkaline aqueous solution than the core fiber is used as a sea component, and only the sea component is dissolved with an alkaline aqueous solution after spinning, but the method is not limited thereto.

The method for forming the ion exchange layer is as follows.

An ion exchange group is introduced to the core fiber, so that the core fiber has an ion exchange capacity. Examples of the ion exchange group to be introduced to the core fiber include a strongly acidic cation exchange group such as a sulfonic acid group, a weakly acidic cation exchange group such as a carboxy group and a phosphate group, and a chelate group. Examples of the monomers having a sulfonic acid group include styrene sulfonic acid, vinyl sulfonic acid, 2-acrylamide-2 methyl propane sulfonic acid, and sodium salts and ammonium salts thereof. Examples of the monomers having a carboxyl group include acrylic monomers such as acrylic acid, methacrylic acid, and the like. In addition, examples of a monomer that itself does not have the ion exchange group, but has a functional group convertible to the ion exchange group include acrylate esters, methacrylate esters, glycidyl methacrylate, styrene, acrylonitrile, acrolein, and chloromethylstyrene. From the viewpoint of the ion exchange capacity, it is particularly preferable to use an acrylic monomer.

As a method for introducing such a functional group to the core fiber, it is preferable to graft copolymerize the monomer having the functional group to the core fiber with a crosslinking agent using an initiator, and the monomer having a cation exchange group may be copolymerized to the core fiber with the crosslinking agent by irradiation with gamma rays or electron beams. The monomer having a cation exchange group is graft copolymerized to the core fiber with the crosslinking agent, whereby an ion exchange layer is formed at the vicinity of the core fiber. Examples of the initiator include ammonium persulfate (APS), azobisisobutyronitrile (AIBN), and benzoyl peroxide (BPO).

In particular, in a case where a peroxide such as ammonium persulfate (APS) or benzoyl peroxide (BPO) is used as the initiator, by using an iron (II) salt, sulfite, sulfinate, hydroxylamine, or the like simultaneously as a reducing agent, the reaction can be further accelerated.

In addition, tetramethylethylenediamine (TEMED), ethylenediaminetetraacetic acid (EDTA) or the like may be added as a substance promoting radical polymerization.

The crosslinking agent is copolymerized with the monomer having a cation exchange group, whereby the density of the cation exchange group in the ion exchange fiber is increased and the ion exchange capacity is improved.

As the crosslinking agent, paraformaldehyde, bifunctional acrylamide, bifunctional acrylate, bifunctional methacrylate, and divinylbenzene are suitably used. Examples of bifunctional acrylamide include N,N'-methylenebisacrylamide. Examples of the bifunctional acrylate include 2-hydroxy-3-acryloyloxypropyl methacrylate, polyethylene glycol diacrylate, and 1,6-hexanediol diacrylate. Examples of the bifunctional methacrylate include ethylene glycol dimethacrylate, diethylene glycol dimethacrylate, triethylene glycol dimethacrylate, and polyethylene glycol dimethacrylate.

In addition to copolymerizing a monomer having an ion exchange group to a core fiber, a method for introducing an ion exchange layer to the core fiber, for example, has (1) a step of bringing a core fiber into contact with an aqueous solution containing a polymer compound having a carboxy group and a compound having two or more functional groups reactive with a carboxy group, (2) a step of draining an excessive aqueous solution attached to the core fiber after step (1), and (3) a step of subjecting the polymer compound having a carboxy group and the compound having two or more functional groups reactive with a carboxy group to a crosslinking reaction by heating after step (2).

In the step of (1), as a method in which the core fiber is brought into contact with the aqueous solution containing the polymer compound having a carboxy group and the compound having two or more functional groups reactive with a carboxy group, a method of immersing the core fibers in the aqueous solution or a method in which the aqueous solution is applied to the core fiber using a coater, a roller, a spray, or the like can be used.

In this step, the concentration of the polymer compound having a carboxy group in the solution is preferably 100 g/L or more, and more preferably 150 g/L or more. When the concentration thereof is 100 g/L or more, the solution can be sufficiently held on the core fiber. On the other hand, the concentration of the polymer compound having a carboxy group in the solution is preferably 500 g/L or less, and more preferably 300 g/L or less. When the concentration thereof exceeds 500 g/L, dissolution becomes difficult, and a viscosity of the solution increases, which makes processing difficult.

In addition, in this step, the concentration of the compound having two or more functional groups reactive with a carboxy group in the solution is preferably 10 g/L or more, and more preferably 50 g/L or more. When the concentration of the compound having two or more functional groups reactive with a carboxy group in the solution is less than 10 g/L, the crosslinking reaction becomes insufficient and the polymer compound having a carboxy group elutes into the water. On the other hand, the concentration of the compound having two or more functional groups reactive with a carboxy group in the solution is preferably 200 g/L or less, and more preferably 100 g/L or less. When the concentration thereof is 200 g/L or less, excessive progress of the crosslinking reaction is suppressed, and as a result, the number of carboxy groups is maintained.

In the step of (2), as a method of draining an excessive aqueous solution attached to the core fiber, a method of draining liquid by using a rubber roller such as a mangle, a method of draining liquid by blowing air with an air nozzle, a method of draining liquid through a nozzle, or the like can be used.

In the step of (3), as a method of subjecting the polymer compound having a carboxy group and the compound having two or more functional groups reactive with a carboxy group to a crosslinking reaction by heating, a method of heating in a heating device such as an oven, a pin tenter, or a method of blowing hot air using a dryer can be used.

In this step, the temperature at which the polymer compound having a carboxy group and the compound having two or more functional groups reactive with a carboxy group are subjected to a crosslinking reaction by heating is 130°C or higher, preferably 150°C or higher, and more preferably 180°C or higher. When the temperature is 130°C or higher, the polymer compound having a carboxy group and the compound having two or more functional groups reactive with a carboxy group can be crosslinked. On the other hand, the heating temperature is preferably 250°C or lower, and more preferably 220°C or less. When the heating temperature is 250°C or lower, the form of the core fiber can be maintained.

In addition, in this step, the time for heating the core fiber is preferably 1 minute or more, and more preferably 3 minutes or more. When the heating time is 1 minute or more, the crosslinking reaction sufficiently proceeds, so that the polymer compound having a carboxy group is less likely to be eluted into water. In addition, the heating time is preferably 30 minutes or less, and more preferably 20 minutes or less. When the heating time is 30 minutes or less, the cost for the processing can be suppressed.

In a case of processing the ion exchange fiber into the form of a woven fabric, a knitted fabric, a nonwoven fabric, or the like, a step of coating the core fiber with the crosslinked polymer compound having an ion exchange group, and/or a step of adhering a crosslinked polymer compound having an ion exchange group to single fiber gaps of the core fiber may be performed before or after a step of processing the core fiber into the form of a woven fabric, a knitted fabric, a nonwoven fabric, or the like.

3. Woven or Knitted Fabric having Ion Exchange Capacity

The core fiber may be woven or knitted before introducing an ion exchange functional group or may be woven or knitted after introducing. In addition, a woven or knitted structure is not particularly limited. Examples thereof include a three-dimensional structure such as a plain weave, a twill weave, a diagonal woven, a satin weave, a change structure such as a change diagonal weave, a double duplex structure such as a vertical double weave, a horizontal double weave, vertical pile weave such as vertical velvet, towel, velour, horizontal pile weave such as velveteen, horizontal velvet, velvet, corduroy, and the like. The woven fabric having these woven structures can be woven by a normal method using a normal loom such as a rapier loom or an air jet loom.

The kind of the knitted fabric may be a weft knit or a warp knit. Preferred examples of the weft knitting structure include a flat knitting, a rubber knitting, a double side knitting, a pearl knitting, a tuck knitting, a floating knitting, a half cardigan knitting, a lace knitting, and an additional wool knitting. Preferred examples of the warp knitting structure include single denbigh knitting, single atlas knitting, double cord knitting, half tricot knitting, fleeced knitting, and jacquard knitting.

The knitting can be performed by a normal method using a normal knitting machine such as a circular knitting machine, a flat knitting machine, a tricot knitting machine, a Raschel knitting machine, and the like.

There is an opening (hereinafter, referred to as op) as a value indicating a distance between the fibers or the bundles of fibers constituting the woven or knitted fabric, and is defined by the following formula.

[Math. 1]

$$op(\mu m) = \frac{10000}{n} - D \qquad (1)$$

n (pieces/cm): number of meshes per 1 cm of woven or knitted fabric, and D: diameter ($\mu$m) of fiber or bundle of fibers constituting woven or knitted fabric

The opening of the woven or knitted fabric having the ion exchange capacity is preferably 10 $\mu$m or more, and more preferably 30 $\mu$m or more. In addition, the opening is preferably 500 $\mu$m or less, and more preferably 300 $\mu$m or less. When the opening of the woven or knitted fabric having the ion exchange capacity is 10 $\mu$m or more, clogging is less likely to occur at the time of flowing water, and fluctuation in water flow resistance can be reduced. When the opening is 500 $\mu$m or less, the hardness component in raw water can be suitably removed without causing short-pass of the raw water when the fabric is formed into a water purification filter and the raw water is passed through the water purification filter. The woven or knitted fabric in a wet state is subjected to the measurement for the opening.

There is a permeation volume (hereinafter, referred to as pv) as a value indicating a ratio of the void volume (cm$^3$) per 1 m$^2$ of the woven or knitted fabric, and is defined by the following formula.

[Math. 2]

$$pv(cm^3/m^2) = 10000 \times \frac{op^2 \times T \times 10^{-4}}{(op + D)^2} \qquad (2)$$

T ($\mu$m): thickness of the woven or knitted fabric

The permeation volume of the woven or knitted fabric having the ion exchange capacity is preferably 10 cm$^3$/m$^2$ or more, and more preferably 20 cm$^3$/m$^2$ or more. In addition, the permeation volume is preferably 200 cm$^3$/m$^2$ or less, and more preferably 100 cm$^3$/m$^2$ or less. When the permeation volume is 10 cm$^3$/m$^2$ or more, clogging is less likely to occur at the time of flowing water, and fluctuation in water flow resistance can be reduced. When the permeation volume is 200 cm$^3$/m$^2$ or less, the hardness component in raw water can be suitably removed without causing short-pass of the raw water when the fabric is formed into a water purification filter and the raw water is passed through the water purification filter. The woven or knitted fabric in a wet state is subjected to the measurement for the permeation volume.

In order to form a woven or knitted fabric, one ion exchange fiber may be used, or a bundle of a plurality of the fibers may be used. In addition, the diameter of the ion exchange fiber or the bundle of the ion exchange fibers constituting the woven or knitted fabric is 30 $\mu$m or more, and preferably 100 $\mu$m or more. In addition, the diameter thereof is 1000 $\mu$m or less, and preferably 500 $\mu$m or less. When the diameter thereof is 30 $\mu$m or more, and the woven or knitted fabrics are stacked, the air gap between the fibers can be maintained and the water flow resistance can be reduced. When the diameter thereof is 1000 $\mu$m or less, the area where the ion exchange fiber contacts with the raw water can be increased, and the ion exchange rate can be increased.

The diameter of fiber or bundle of fibers constituting the woven or knitted fabric can be measured by observing the woven or knitted fabric with a microscope. In a case where a plurality of fibers constitute a bundle of fibers and the bundle of fibers constitutes a woven or knitted fabric, the diameter of the bundle of fibers may be measured. In a case where the woven or knitted fabric is configured to include a single fiber, the fiber diameter of the fiber may be measured.

The basis weight of the woven or knitted fabric is preferably 10 g/m$^2$ or more, more preferably 30 g/m$^2$ or more, and further preferably 50 g/m$^2$ or more. In addition, the basis weight of the woven or knitted fabric is preferably 1000 g/m$^2$ or less, more preferably 500 g/m$^2$ or less, and further preferably 200 g/m$^2$ or less. When the basis weight of the woven or knitted fabric is 10 g/m$^2$ or more, the hardness component in raw water can be suitably removed without causing short-pass of the raw water when the fabric is formed into the water purification filter. In addition, when the basis weight thereof is 1000 g/m$^2$ or less, clogging is less likely to occur, and fluctuation in water flow resistance at the time of flowing water can be reduced.

In any one of the woven fabric, the knitted fabric, and the nonwoven fabric, only one type of ion exchange fiber may be included, or a plurality of types of ion exchange fibers which are different in at least one of compositions or structures from each other may be included.

4. Water Purification Filter

The water purification filter includes a tubular perforated core material and a woven or knitted fabric (this woven or knitted fabric is formed of ion exchange fiber) wound around an outer periphery thereof.

Although the perforated core material is preferably made of a porous synthetic resin, the material may be one drilled in a cylindrical body of a dense synthetic resin. As the synthetic resin, polyolefins such as polyethylene and polypropylene and fluororesins such as PTFE and PFA are suitable, but the material is not limited thereto. The water purification filter can be obtained by stacking.

The diameter (outer diameter) of the perforated core material is preferably 5 mm or more and 50 mm or less, and particularly preferably 20 mm or more and 40 mm or less. The length of the perforated core material is not particularly limited, but the length thereof is normally set to 80 mm or more and 500 mm or less. The thickness of the woven or knitted fabric layer wound around the perforated core material is preferably 5 mm or more and 50 mm or less, and more preferably 10 mm or more and 40 mm or less in order to secure filtration performance and suppress filtration pressure loss. It is preferable to fix the end of the wound woven or knitted fabric to the outer peripheral surface of the woven or knitted fabric wound body by welding, bonding or the like. It is preferable to seal the wound end surface with a disk-shaped plate or the like.

For the water purification filter configured in this manner, the liquid to be treated is permeated from the inside of the perforated core material, and the permeated liquid is taken out from the outer peripheral surface of the woven or knitted fabric wound body. In the normal case, the filter is disposed in the cylindrical casing so as to be coaxially with the casing. The liquid to be treated is allowed to permeate from the inside of the perforated core material toward the outer peripheral surface of the filter and the permeated liquid is allowed to flow out to the outside of the casing at an outlet port on the one end surface side of the casing.

As the liquid to be treated (raw water), water is preferable and tap water is exemplified. In particular, the water purification filter is suitably used for removing a metal ion in water. Examples of the metal ion include a hardness component and a heavy metal ion. Specific examples of the hardness component include calcium ion and magnesium ion. The heavy metal ion refers to a metal element having a specific gravity of 4 or more, and specific examples thereof include lead, mercury, arsenic, copper, cadmium, chromium, nickel, manganese, cobalt, and zinc.

5. Water Treatment Method

A water treatment method using the water purification filter will be described.

The method includes a step of permeating raw water through the water purification filter to remove the hardness component, and a step of permeating permeate of the water purification filter through a reverse osmosis membrane element. Before permeating the raw water through the water purification filter, the raw water may be permeated through the prefilter. The prefilter primarily removes the fine particle and the like in the raw water and reduces the load on the reverse osmosis membrane. The hardness component is a component that is removed by the reverse osmosis membrane element, but when the component is concentrated on the membrane surface, the component precipitates as a salt and lowers the water permeability. Therefore, the hardness component is removed by using the water purification filter of the present invention, whereby it is possible to suppress the lowering of the water permeability of the reverse osmosis membrane element and to prolong the service life thereof. Since the water purification filter of the present invention has low water flow resistance, it is possible to reduce the operation pressure required for operation of the water purification filter and the reverse osmosis membrane in the water treatment.

EXAMPLES

Hereinafter, the present invention will be described in more detail with reference to examples, but the present invention is not limited in any way by these examples.

An ion exchange crosslinked layer content, the diameter of the fiber or the bundle of the fibers constituting the woven or knitted fabric, an ion exchange capacity in the comparative example, a removal rate of calcium ion, a water flow resistance, and a decrease rate in water permeability of the reverse osmosis element were measured as follows.

(Ion Exchange Crosslinked Layer Content)

The ion exchange layer refers to a layer having a sodium atom concentration of 10% by weight or more in the ion exchange fiber in which the layer having the sodium atom concentration of 10% by weight or more is present at 50% or more of the cross-sectional area of the fiber and the swelling ratio is 50% or less, in a case where the ion exchange fiber is immersed in a sodium hydroxide aqueous solution, and thereafter the cross section of the ion exchange fiber in sodium type is observed with a scanning electron microscope/electron probe micro analyzer (SEM/EPMA). The sodium atom concentration (% by weight) is a weight fraction of sodium element in each pixel in the cross-sectional image when the sample section is measured by SEM/EPMA. In EPMA, the X-ray intensity of $K\alpha$ (1.191 nm) detected when irradiated with an electron beam to a sodium chloride crystal as a standard sample corresponds to the sodium atom concentration of 39.34% by weight. The sodium atom concentration was calculated from the X-ray intensity of $K\alpha$ (1.191 nm) detected from the pixel in the cross-sectional image when the cross section of the sample was measured by SEM/EPMA. Detailed SEM/EPMA measurement conditions are indicated.

Device: Electron Probe Microanalyzer (Fe-EPMA) JXA-8530F manufactured by JEOL Ltd.
Acceleration voltage: 10 kV
Irradiation current: 15 nA
Measurement time: 30 ms
Beam size: 1 $\mu$m
Analytical X-ray or spectroscopic crystal: Na $K\alpha$ (1.191 nm) or TAPH (rubidium acidic phthalate)

The cross section of the sample was formed with a microtome and subjected to carbon deposition for measurement.

The swelling ratio is the rate of increase in fiber diameter when the ion exchange fiber is made to be the Na type and observed with the microscope, with respect to the fiber diameter when the ion exchange fiber in the H type is observed with a microscope. In order to make the ion exchange fiber into the H type, the ion exchange fiber was immersed in 1 mol/L hydrochloric acid and then washed with pure water. In order to make the ion exchange fiber into the Na type, the ion exchange fiber was immersed in 0.1 mol/L of sodium hydroxide aqueous solution for 1 hour and then washed with pure water. The fraction of the area of the ion exchange layer with respect to the fiber cross sectional area cut by the plane perpendicular to the fiber longitudinal direction was defined as the ion exchange crosslinked layer content.

(Measurement Method of Ion Exchange Capacity in Na Type Wet State)

40 mL of 6 mol/L hydrochloric acid aqueous solution was prepared and 1 g of the ion exchange fiber in the Na type wet state was immersed therein for 1 hour. Thereafter, the fiber was washed with pure water, and it was confirmed that the supernatant aqueous solution became neutral. Thereafter, the ion exchange fiber was immersed in 0.1 M sodium hydroxide aqueous solution (knitted fabric 1 g/40 mL - sodium hydroxide aqueous solution) and stirred for 1 hour. Thereafter, 5 mL of supernatant of the solution was collected and 5 mL of 0.1 M hydrochloric acid aqueous solution was added. 10 mL of the solution was subjected to neutralization titration with a 0.1 mol/L of sodium hydroxide aqueous solution using a phenolphthalein solution as an indicator. By dividing the number of moles of sodium hydroxide required for neutralization by the weight of the ion exchange fiber in a wet state, it was defined as the ion exchange capacity (meq/wet-g) in the Na type wet state. The wet state refers to a state where the ion exchange fiber washed with water after the Na conversion treatment was pressed with a waste cloth, thereby removing the water attached to the surface.

(Diameter of Fiber or Bundle of Fibers Constituting Woven or Knitted Fabric)

The knitted fabric of the ion exchange fiber was immersed in RO water, and then the diameters of 10 fibers were measured by observing with the microscope, and the average value was defined as the diameter of the ion exchange fiber. In a case where the woven or knitted fabric was formed of a plurality of filaments, the diameter of the bundle of the fibers was measured.

(Opening)

The opening op was calculated according to Formula (1) described above.
n was measured by observing the woven or knitted fabric with the microscope.

(Permeation Volume)

The permeation volume pv was calculated according to Formula (2) described above.
The thickness T of a woven or knitted fabric was measured by observing the woven or knitted fabric with the microscope.

(Removal Rate of Calcium Ion)

A woven or knitted fabric of ion exchange fiber was stacked on a column having a diameter of 40 mm and a thickness of 20 mm and raw water was passed therethrough so that the space time SV value was 500($H^{-1}$). The raw water was an aqueous solution containing 2 mmol/L of calcium chloride, 4 mmol/L of sodium hydrogen carbonate, and 4 mmol/L of sodium chloride. The concentration of calcium ions in permeated liquid of the column with respect to 500 mL of the raw water was measured by an inductively coupled plasma-atomic emission spectrometry (ICP-AES) to calculate the removal rate of Ca.

(Water Flow Resistance)

A woven or knitted fabric of ion exchange fiber was stacked on the column having a diameter of 40 mm and a thickness of 20 mm in water in a state where a load is not applied to the woven fabric or knitted fabric until the woven fabric or the knitted fabric reached the upper end of the column, and the column was sealed. Thereafter, pure water was passed through the column. The pressure loss A (Pa), which is the difference in pressure between the column inlet and the column outlet, was measured by changing a permeation flow rate (m/s). The pressure loss B when water was passed through the apparatus without filling therewith the sample was measured by changing a permeation flow rate. The value B was subtracted from the value A, the relationship between the pressure loss of the sample and the flow rate was plotted, and the relationship of direct proportion was confirmed. From an inclination of the straight line, the water flow resistance of the sample in the packed bed was determined.

(Decrease Rate in Water Permeability of Reverse Osmosis Element)

The ratio of the permeation flow rate (mL/min) when the raw water was permeated through the prefilter, the water purification filter, and the reverse osmosis element in this order, and was passed through for 10 hours with respect to the permeation flow rate (mL/min) when the raw water was passed through for 2 minutes at an inlet pressure of 0.5 MPa, was defined as the decrease rate in the water permeability. The raw water was an aqueous solution containing 2 mmol/L of calcium chloride, 4 mmol/L of sodium hydrogen carbonate, and 4 mmol/L of sodium chloride.

(Reference Example)

Nylon was used for an island component, and PET having a higher dissolution rate in the sodium hydroxide aqueous solution than that of the island component was used for a sea component. Spinning was performed using a sea-island composite fiber spinneret, and the obtained discharge yarn was further drawn. Accordingly, a composite fiber having a diameter of the island component of 700 nm and an outer diameter of a fiber bundle of 200 $\mu$m was obtained.
This drawn yarns were knitted by a knitting method to obtain a flat knitted fabric. In order to remove the sea component of the sea-island composite drawn yarn, the yarn was immersed in the sodium hydroxide aqueous solution. When the surface of the obtained knitted fabric was observed with the scanning electron microscope SEM, it was confirmed that the sea component was completely dissolved and removed.

(Example 1)

In order to introduce a functional group to the knitted fabric prepared in Reference Example, the fabric was immersed in a 70°C aqueous solution of 5.0% by weight of 2-acrylamide-2 methylpropanesulfonic acid, 10% by weight of N,N'-methylenebisacrylamide, 0.05% by weight of APS, 0.15% by weight of sodium hydroxymethanesulfinate, and 0.05% by weight of ethylenediaminetetraacetic acid for 1 hour, and dried.
A water purification filter was prepared by winding this knitted fabric around an outer periphery of a perforated core material made of polypropylene having an outer periphery of 50 mm and a length of 400 mm so as to have a thickness of 20 mm. The filter was treated with 0.1 mol/L sodium hydroxide aqueous solution to subject the sulfone group to sodium conversion and rinsed with ultrapure water. The performance of the obtained water purification filter is indicated in Table 1. The obtained knitted fabric of the ion exchange fiber had an opening of 120 $\mu$m and a permeation volume of 45.1 $cm^3/m^2$.

(Example 2)

In order to introduce a functional group to the knitted fabric prepared in Reference Example, the fabric was immersed in a 70°C aqueous solution of 1.5% by weight of acrylic acid, 3.5% by weight of methacrylic acid, 10% by weight of N,N'-methylenebisacrylamide, 0.05% by weight of APS, 0.15% by weight of sodium hydroxymethanesulfinate, and 0.05% by weight of ethylenediaminetetraacetic acid for 1 hour, and dried.
Using this knitted fabric, a water purification filter was obtained in the same manner as in Example 1. The filter was treated with 0.1 mol/L sodium hydroxide aqueous solution to subject the carboxy group to sodium conversion and rinsed with ultrapure water. The performance of the obtained water purification filter is indicated in Table 1. The obtained knitted fabric of the ion exchange fiber had an opening of 135 $\mu$m and a permeation volume of 49.2 cm$^3$/m$^2$.

(Example 3)

A composite fiber having a diameter of the island component of 700 nm and an outer diameter of the fiber bundle of 50 $\mu$m was obtained in the same manner as in Reference Example. 15 drawn yarns were twisted to obtain a flat knitted fabric by a normal knitting method. In order to remove the sea component of the sea-island composite drawn yarn, the alkali weight was reduced with the sodium hydroxide aqueous solution. When the surface of the obtained knitted fabric was observed with the scanning electron microscope SEM, it was confirmed that the sea component was completely dissolved and removed. Thereafter, a functional group was introduced in the same manner as in Example 2, and a water purification filter was obtained in the same manner as in Example 1. The filter was treated with 0.1 mol/L sodium hydroxide aqueous solution to subject the carboxy group to sodium conversion and rinsed with ultrapure water. The performance of the obtained water purification filter is indicated in Table 1. Incidentally, the obtained knitted fabric of the ion exchange fiber had an opening of 131 $\mu$m and a permeation volume of 44.9 cm$^3$/m$^2$.

(Example 4)

Nylon fibers having a diameter of 50 $\mu$m were spun by a melt spinning method, and 15 drawn yarns were twisted to obtain a flat knitted fabric by a normal knitting method. Thereafter, a functional group was introduced in the same manner as in Example 2. A water purification filter was obtained in the same manner as in Example 1. The filter was treated with 0.1 mol/L sodium hydroxide aqueous solution to subject the carboxy group to sodium conversion and rinsed with ultrapure water. The performance of the obtained water purification filter is indicated in Table 1. Incidentally, the obtained knitted fabric of the ion exchange fiber had an opening of 128 $\mu$m and a permeation volume of 43.6 cm$^3$/m$^2$.

(Example 5)

Nylon fibers having a diameter of 200 $\mu$m were spun by a melt spinning method, and the drawn yarns were knitted by a normal knitting method to obtain a flat knitted fabric. Thereafter, a functional group was introduced in the same manner as in Example 2. A water purification filter was obtained in the same manner as in Example 1. The filter was treated with 0.1 mol/L sodium hydroxide aqueous solution to subject the carboxy group to sodium conversion and rinsed with ultrapure water. The performance of the obtained water purification filter is indicated in Table 1. Incidentally, the obtained knitted fabric of the ion exchange fiber had an opening of 127 $\mu$m and a permeation volume of 45.9 cm$^3$/m$^2$.

(Example 6)

A water purification filter was prepared in the same manner as in Example 5, except that the diameter of the fiber of the spun nylon was 400 $\mu$m. The filter was treated with 0.1 mol/L sodium hydroxide aqueous solution to subject the carboxy group to sodium conversion and rinsed with ultrapure water. The performance of the obtained water purification filter is indicated in Table 1. Incidentally, the obtained knitted fabric of the ion exchange fiber had an opening of 175 $\mu$m and a permeation volume of 46.8 cm$^3$/m$^2$.

(Example 7)

A water purification filter was prepared in the same manner as in Example 5, except that the diameter of the fiber of the spun nylon was 50 $\mu$m. The filter was treated with 0.1 mol/L sodium hydroxide aqueous solution to subject the carboxy group to sodium conversion and rinsed with ultrapure water. The performance of the obtained water purification filter is indicated in Table 1. Incidentally, the obtained knitted fabric of the ion exchange fiber had an opening of 119 $\mu$m and a permeation volume of 56.3 cm$^3$/m$^2$.

(Comparative Example 1)

Nylon fibers having a diameter of 280 $\mu$m were spun by a melt spinning method, and the drawn yarns were knitted by a normal knitting method to obtain a flat knitted fabric. Thereafter, in order to introduce a functional group, the fabric was immersed in a 70°C aqueous solution of 0.8% by weight of acrylic acid, 1.7% by weight of methacrylic acid, 5% by weight of N,N'-methylenebisacrylamide, 0.03% by weight of APS, 0.07% by weight of sodium hydroxymethanesulfinate, and 0.03% by weight of ethylenediaminetetraacetic acid for 1 hour, and dried. Using the knitted fabric, a water purification filter was obtained in the same manner as in Example 1. The filter was treated with 0.1 mol/L sodium hydroxide aqueous solution to subject the carboxy group to sodium conversion and rinsed with ultrapure water. The performance of the obtained water purification filter is indicated in Table 1. Incidentally, the obtained knitted fabric of the ion exchange fiber had an opening of 122 $\mu$m and a permeation volume of 40.9 cm$^3$/m$^2$.

(Comparative Example 2)

Nylon fibers having a diameter of 50 $\mu$m were spun by a melt spinning method, and the drawn yarns were knitted by a normal knitting method to obtain a flat knitted fabric. Thereafter, in order to introduce a functional group, the fabric was immersed in a 70°C aqueous solution of 5.5% by weight of acrylic acid, 5.3% by weight of methacrylic acid, 15% by weight of N,N'-methylenebisacrylamide, 0.15% by weight of APS, 0.21% by weight of sodium hydroxymethanesulfinate, and 0.15% by weight of ethylenediaminetetraacetic acid for 1 hour, and dried. Using the knitted fabric, a water purification filter was obtained in the same manner as in Example 1. The filter was treated with 0.1 mol/L sodium hydroxide aqueous solution to subject the carboxy group to sodium conversion and rinsed with ultrapure water. The performance of the obtained water purification filter is indicated in Table 1. Incidentally, the obtained knitted fabric of the ion exchange fiber had an opening of 49 $\mu$m and a permeation volume of 8.6 cm$^3$/m$^2$.

(Example 8)

Using an 84 dtex, 72 filament PET fibers, knitted fabric was knitted with a 22 gauge circular knitting machine. The knitted fabric was refined, dried, and set in an intermediate according to a normal method. Next, approximately 10 g of the knitted fabric was immersed in 1 L of an aqueous solution containing 300 g/L polyacrylic acid 25,000 (manufactured by Wako Pure Chemical Industries, Ltd.) and 150 g/L polyglycerol polyglycidyl ether (EX-512 manufactured by Nagase ChemteX Corporation). Next, the knitted fabric was drained with a mangle and heated at 130°C for 3 minutes. The obtained knitted fabric was washed with running water and dried again by heating at 130°C for 3 minutes. Three cycles were performed with immersion of the knitted fabric in the solution, draining, heating, washing, and drying as one cycle.
The knitted fabric of the obtained ion exchange fiber was immersed in 1 mol/L sodium carbonate aqueous solution for 1 hour, and the carboxy group was substituted with a sodium type. Furthermore, the fabric was washed with RO water until the pH of the washing water became 8 or less. Using the knitted fabric, an ion exchange capacity, the diameter of the ion exchange fiber, a hardness component removal rate, and a heavy metal ion removal rate were measured. Incidentally, the obtained knitted fabric of the ion exchange fiber had an opening of 105 $\mu$m and a permeation volume of 37.3 cm$^3$/m$^2$.
Next, a water purification filter was prepared by winding the knitted fabric of the ion exchange fiber around an outer periphery of a perforated core material made of polypropylene having an outer periphery of 50 mm and a length of 400 mm so as to have a thickness of 20 mm. The filter was immersed in 0.1 mol/L sodium carbonate aqueous solution and washed with the RO water until the pH of the washing water became 8 or less. The results of evaluating the decrease in water permeability of the reverse osmosis element using the obtained water purification filter are indicated in Table 2.

(Example 9)

A water purification filter was prepared in the same manner as in Example 8 except that the crosslinking agent was replaced with polyoxazoline (Epocross WS-500, manufactured by Nippon Shokubai Co., Ltd.). The results of evaluating the decrease in water permeability of the reverse osmosis element using the obtained water purification filter are indicated in Table 2. Incidentally, the obtained knitted fabric of the ion exchange fiber had an opening of 101 $\mu$m and a permeation volume of 35.1 cm$^3$/m$^2$.

(Example 10)

A water purification filter was prepared in the same manner as in Example 8 except that the crosslinking agent was replaced with polycarbodiimide (Carbodilite V-02, manufactured by Nisshinbo Chemical Co., Ltd.). The results of evaluating the decrease in water permeability of the reverse osmosis element using the obtained water purification filter are indicated in Table 2. Incidentally, the obtained knitted fabric of the ion exchange fiber had an opening of 106 $\mu$m and a permeation volume of 37.3 cm$^3$/m$^2$.

(Example 11)

A water purification filter was prepared in the same manner as in Example 8 except that the heating temperature was changed to 170°C instead of 130°C. The results of evaluating the decrease in water permeability of the reverse osmosis element using the obtained water purification filter are indicated in Table 2. Incidentally, the obtained knitted fabric of the ion exchange fiber had an opening of 115 μm and a permeation volume of 43.4 cm³/m².

(Example 12)

A water purification filter was prepared in the same manner as in Example 9 except that the heating temperature was changed to 170°C instead of 130°C. The results of evaluating the decrease in water permeability of the reverse osmosis element using the obtained water purification filter are indicated in Table 2. Incidentally, the obtained knitted fabric of the ion exchange fiber had an opening of 122 μm and a permeation volume of 47.3 cm³/m².

(Example 13)

A water purification filter was prepared in the same manner as in Example 10 except that the heating temperature was changed to 170°C instead of 130°C. The results of evaluating the decrease in water permeability of the reverse osmosis element using the obtained water purification filter are indicated in Table 2. Incidentally, the obtained knitted fabric of the ion exchange fiber had an opening of 119 μm and a permeation volume of 46.0 cm³/m².

(Example 14)

A water purification filter was prepared in the same manner as in Example 8 except that the heating temperature was changed to 200°C instead of 130°C. The results of evaluating the decrease in water permeability of the reverse osmosis element using the obtained water purification filter are indicated in Table 2. Incidentally, the obtained knitted fabric of the ion exchange fiber had an opening of 130 μm and a permeation volume of 52.8 cm³/m².

(Example 15)

A water purification filter was prepared in the same manner as in Example 9 except that the heating temperature was changed to 200°C instead of 130°C. The results of evaluating the decrease in water permeability of the reverse osmosis element using the obtained water purification filter are indicated in Table 2. Incidentally, the obtained knitted fabric of the ion exchange fiber had an opening of 129 μm and a permeation volume of 51.9 cm³/m².

(Example 16)

A water purification filter was prepared in the same manner as in Example 10 except that the heating temperature was changed to 200°C instead of 130°C. The results of evaluating the decrease water in permeability of the reverse osmosis element using the obtained water purification filter are indicated in Table 2. Incidentally, the obtained knitted fabric of the ion exchange fiber had an opening of 125 μm and a permeation volume of 49.9 cm³/m².

Table 1

| | Performance | | | Physical Properties | | | | | | |
|---|---|---|---|---|---|---|---|---|---|---|
| | Removal Rate of Calcium in Permeate | Water Flow Resistance | Decrease Rate in Water Permeability of RO Element | Type of Ion Exchange Group | Ion Exchange Capacity in Na Type Wet State | Diameter of Fiber | Swelling Ratio | Crosslinked Layer content | Number of Single Fibers of Knitted Fabric | Number of Core Fibers |
| | (%) | ($\times 10^4$ Pa s/m) | (%) | (-) | (meq/wet-g) | ($\mu$m) | (%) | (%) | (-) | (-) |
| Example 1 | 98.9 | 8.48 | 10.0 | Sulfone Group | 2.6 | 359 | 42.3 | 65.0 | 1 | 100 |
| Example 2 | 99.2 | 8.62 | 8.1 | Carboxy Group | 3.9 | 355 | 38.1 | 69.0 | 1 | 100 |
| Example 3 | 99.3 | 7.33 | 7.9 | Carboxy Group | 4.0 | 360 | 41.1 | 70.9 | 15 | 100 |
| Example 4 | 99.4 | 7.29 | 7.8 | Carboxy Group | 3.7 | 356 | 37.6 | 69.2 | 15 | 1 |
| Example 5 | 99.6 | 7.19 | 7.2 | Carboxy Group | 4.0 | 356 | 40.9 | 68.3 | 1 | 1 |
| Example 6 | 93.5 | 4.26 | 16.4 | Carboxy Group | 3.8 | 926 | 43.1 | 75.9 | 1 | 1 |
| Example 7 | 99.1 | 18.90 | 11.2 | Carboxy Group | 3.7 | 95 | 40.9 | 70.9 | 1 | 1 |
| Comparative Example 1 | 70.3 | 9.80 | 20.3 | Carboxy Group | 2.7 | 333 | 25.1 | 25.0 | 1 | 1 |
| Comparative Example 2 | 99.1 | 960 | 23.8 | Carboxy Group | 4.3 | 469 | 70.3 | 92.0 | 1 | 1 |

Table 2

| | Performance | | | Physical Properties | | | | | | |
|---|---|---|---|---|---|---|---|---|---|---|
| | Removal Rate of Calcium in Permeate | Water Flow Resistance | Decrease Rate in Water Permeability of RO Element | Type of Crosslinking Agent | Ion Exchange Capacity in Na Type Wet State | Diameter of Fiber | Swelling Ratio | Crosslinked Layer content | Number of Single Fibers of Knitted Fabric | Number of Core Fibers |
| | (%) | ($\times 10^4$ Pa s/m) | (%) | (-) | (meq/wet-g) | ($\mu$m) | (%) | (%) | (-) | (-) |
| Example 8 | 80.2 | 9.90 | 12.0 | Polyglycidyl | 2.4 | 350 | 48.8 | 67.0 | 1 | 72 |
| Example 9 | 86.2 | 9.62 | 11.0 | Polyoxazoline | 2.6 | 350 | 49.3 | 68.8 | 1 | 72 |
| Example 10 | 85.2 | 9.26 | 10.0 | Polycarbodiimide | 2.3 | 360 | 49.8 | 69.8 | 1 | 72 |
| Example 11 | 91.1 | 8.01 | 9.9 | Polyglycidyl | 3.2 | 340 | 45.3 | 69.1 | 1 | 72 |
| Example 12 | 90.3 | 8.09 | 9.4 | Polyoxazoline | 3.1 | 342 | 41.1 | 71.3 | 1 | 72 |
| Example 13 | 94.9 | 8.33 | 10.0 | Polycarbodiimide | 3.4 | 336 | 42.9 | 70.3 | 1 | 72 |
| Example 14 | 99.3 | 6.99 | 7.3 | Polyglycidyl | 4.1 | 329 | 37.3 | 74.3 | 1 | 72 |
| Example 15 | 98.1 | 7.55 | 7.1 | Polyoxazoline | 3.9 | 333 | 39.1 | 75.5 | 1 | 72 |
| Example 16 | 97.9 | 7.49 | 6.9 | Polycarbodiimide | 4.0 | 328 | 34.6 | 71.0 | 1 | 72 |

This application is based on Japanese Patent Application No. 2016-169275 filed on August 31, 2016 and Japanese Patent Application No. 2016-251199 filed on December 26, 2016, the contents of which are incorporated herein by way of reference.

INDUSTRIAL APPLICABILITY

The ion exchange fiber of the present invention can be suitably used for hard water softening or a pure water production.

**Claims**

1. An ion exchange fiber comprising:

    a core fiber; and
    an ion exchange layer that is disposed at a vicinity of the core fiber and comprises a crosslinked polymer compound having an ion exchange group,
    wherein, in a cross section perpendicular to a longitudinal direction of the ion exchange fiber, an area of the ion exchange layer occupies 50% or more and 90% or less of a total cross sectional area, and
    the ion exchange fiber has a swelling ratio of 50% or less.

2. The ion exchange fiber according to claim 1, having an ion exchange capacity in an Na type wet state of 3.0 meq/wet-g or more.

3. The ion exchange fiber according to claim 1 or 2, wherein the ion exchange group is at least one functional group selected from the group consisting of carboxy group, chelate group, and phosphate group.

4. The ion exchange fiber according to any one of claims 1 to 3, having two or more core fibers.

5. The ion exchange fiber according to any one of claims 1 to 4, wherein the crosslinked polymer compound having an ion exchange group is formed by a crosslinking reaction between a polymer compound having a carboxy group and a compound having two or more functional groups reactive with a carboxy group.

6. The ion exchange fiber according to claim 5, wherein the polymer compound having a carboxy group is polyacrylic acid, and
    the compound having two or more functional groups reactive with a carboxy group is a polyglycidyl compound, a polyoxazoline compound, or a polycarbodiimide compound.

7. The ion exchange fiber according to any one of claims 1 to 6, wherein the ion exchange layer contains 50% by weight or more of a polymer comprising an acrylic monomer.

8. The ion exchange fiber according to any one of claims 1 to 7, wherein the core fiber contains at least one polymer selected from the group consisting of polyethylene, polypropylene, polyethylene terephthalate, and nylon.

9. A water purification filter comprising:

    a woven or knitted fabric including the ion exchange fiber according to any one of claims 1 to 8 or a bundle of the ion exchange fibers,
    wherein a diameter of the ion exchange fiber or the bundle of the ion exchange fibers is 30 $\mu$m or more and 1000 $\mu$m or less.

10. A water treatment method comprising:

    a step of permeating raw water through a prefilter;
    a step of permeating permeate of the prefilter through the water purification filter according to claim 9, thereby removing a hardness component from the permeate; and
    a step of permeating permeate of the water purification filter through a reverse osmosis membrane element.

## *Fig. 1*

ION EXCHANGE FIBER

ION EXCHANGE LAYER

CORE FIBER

*Fig. 2*

ION EXCHANGE FIBER

ION EXCHANGE LAYER

CORE FIBER

## INTERNATIONAL SEARCH REPORT

| International application No. |
|---|
| PCT/JP2017/030866 |

**A. CLASSIFICATION OF SUBJECT MATTER**
B01J47/127(2017.01)i, B01J39/20(2006.01)i, B01J45/00(2006.01)i, C02F1/42(2006.01)i, C02Fl/44(2006.01)i, D06M14/16(2006.01)i, D06M15/263(2006.01)i, D06M15/285(2006.01)i

According to International Patent Classification (IPC) or to both national classification and IPC

**B. FIELDS SEARCHED**

Minimum documentation searched (classification system followed by classification symbols)
B01J47/127, B01J39/20, B01J45/00, C02F1/42, C02F1/44, D06M14/16, D06M15/263, D06M15/285

Documentation searched other than minimum documentation to the extent that such documents are included in the fields searched
| | |
|---|---|
| Japanese Published Examined Utility Model Applications | 1922-1996 |
| Japanese Published Unexamined Utility Model Applications | 1971-2017 |
| Japanese Examined Utility Model Registrations | 1996-2017 |
| Japanese Registered Utility Model Specifications | 1994-2017 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 4-187248 A (DAIWABO CREATE CO., LTD.) 3 July 1992, claims 1-5, page 3, upper right column, line 18 to lower left column, line 5, page 4, upper left column, line 2 to lower right column, line 16, page 10, upper left column, lines 3-13, page 10, lower right column, lines 15-19, fig. 1 (Family: none) | 1-4, 8-10<br>5-7 |
| Y | JP 2008-19530 A (TOYOTA BOSHOKU CORPORATION) 31 January 2008, claim 3, paragraphs [0001], [0003], [0004], [0009], [0017], [0029], [0042]-[0046], [0055], fig. 4<br>& US 2008/0011674 A1<br>& EP 1878815 A2, claim 5, paragraphs [0002], [0004]-[0006], [0025], [0037], [0051]-[0054], [0063], fig. 4 | 1-10 |
| Y | JP 8-199480 A (JAPAN ATOMIC ENERGY RESEARCH INSTITUTE) 6 August 1996, claim 8, paragraphs [0018], [0022], [0023], [0026], [0035], [0036], fig. 1(c)<br>& US 5783608 A, page 2, right column, lines 40-48, page 3, left column, lines 10-22, 43-48, page 3, right column, lines 49-67<br>& US 6127433 A & EP 713933 A1 & DE 69511823 C & DE 69511823 T2 & CA 2157442 A1 & KR 10-0389575 B1 & KR 10-0363339 B1 | 1-10 |

☒ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 20 November 2017 | 28 November 2017 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

## INTERNATIONAL SEARCH REPORT

| International application No. |
|---|
| PCT/JP2017/030866 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 53-106687 A (MITSUBISHI RAYON CO., LTD.) 16 September 1978, claims 1-2, page 1, lower right column, line 18 to page 2, upper left column, line 6, page 4, upper left column, lines 1-8 (Family: none) | 1-10 |
| Y | JP 8-269218 A (ASAHI KASEI KOGYO CO., LTD.) 15 October 1996, paragraphs [0016], [0032], [0035] (Family: none) | 2-10 |
| Y | JP 2013-123699 A (MITSUBISHI PAPER MILLS LIMITED) 24 June 2013, claim 1, paragraphs [0005], [0015]-[0017], [0019], [0027], [0028], [0031] (Family: none) | 5-10 |
| Y | JP 2010-23006 A (NOMURA MICRO SCIENCE CO., LTD.) 4 February 2010, paragraphs [0003], [0018], [0022], [0023], [0037], fig. 1 (Family: none) | 10 |
| A | JP 8-503272 A (HOECHST CELANESE CORPORATION) 9 April 1996, claims 1, 13, page 14, lines 3-10, fig. 4<br>& US 5486410 A, page 8, left column, lines 46-61, fig. 4<br>& US 5605746 A & US 5674339 A & US 6024813 A & WO 1994/011556 A1 & EP 669993 A1 & EP 825286 A2 & DE 69316027 T2 | 1 |
| A | JP 1-234428 A (JAPAN EXLAN CO., LTD.) 19 September 1989, claim 1, page 1, lower left column, lines 14-17, page 2, upper right column, lines 1-6<br>& US 5109028 A, claim 1, page 2, left column, lines 5-10, page 2, left column, line 64 to page 2, right column, line 2 | 1 |
| A | JP 9-87399 A (NITIVY CO., LTD.) 31 March 1997, claim 1, paragraphs [0016], [0029], [0032], [0035] (Family: none) | 1 |
| A | JP 2005-246126 A (NOMURA MICRO SCIENCE CO., LTD.) 15 September 2005, paragraphs [0036], [0054], and fig. 2 (Family: none) | 10 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1234428 A
- JP 9087399 A
- JP 8199480 A
- JP 2016169275 A
- JP 2016251199 A